# EUROPÄISCHE PATENTSCHRIFT

(11) **EP 1 201 939 B1**
(45) Veröffentlichungstag und Bekanntmachung des Hinweises auf die Patenterteilung: **16.06.2004**
(21) Anmeldenummer: 01811006.4
(22) Anmeldetag: 15.10.2001
(51) Int. Cl.: F16B 13/14

(54) **Für aushärtbare Substanzen ausgebildetes Befestigungsmittel.**
Fixing device for use with settable substances.
Dispositif de fixation utilisable avec des matériaux durcissables.

(30) Priorität: 25.10.2000 DE 10052810
(43) Veröffentlichungstag der Anmeldung: 02.05.2002
(73) Patentinhaber: HILTI Aktiengesellschaft, 9494 Schaan (LI)
(72) Erfinder: Surberg, Cord-Henrik, AT-6800 Feldkirch (AT); John, Marcel, CH-8887 Mels (CH); Laternser, Ralf, DE-53797 Lohmar (DE); Siemers, Michael, AT-6800 Feldkirch (AT); Bianchi, Pietro, AT-6800 Feldkirch (AT); Köck, Gerhard, AT-6710 Nenzing (AT)
(74) Vertreter: Wildi, Roland

(56) Entgegenhaltungen:
- EP-A- 0 670 429
- GB-A- 2 169 050
- US-A- 4 430 025
- US-A- 4 993 900
- US-A- 5 243 805
- US-A- 5 472 296

## Beschreibung

Die Erfindung betrifft ein für aushärtbare Substanzen ausgebildetes Befestigungsmittel, insbesondere eine in Sacklöchern in Beton durch Injektionsharzmörtel befestigbare Ankerstange.

Für die Befestigung einer Last an der Aussenfläche eines festen Bauteils wie armierten Beton werden üblicherweise Befestigungsmittel verwendet, die in Sacklöcher eingesetzt mit dem Bauteil eine kraft- und/oder formschlüssige Verbindung eingehen. Teilweise werden diese Befestigungsmittel mittels einer, zwischen diesem und der Bohrlochwandung eingebrachten, aushärtbaren, Substanz zumindest teilweise adhäsiv befestigt. Dazu wird die aushärtbare Substanz über zerstörbare Schlauchbeutel zuvor oder über Injektionsöffnungen nach dem Einbringen des Befestigungsmittels eingebracht, wobei zumeist überschüssige Substanz aus dem Ringraum überquillt. Bis zur Aushärtung muss das zuvor lose im Sackloch aufgenommene Befestigungsmittel bezüglich seiner Lager fixiert und darf noch nicht mechanisch beansprucht werden, was bspw. bei einer Deckenmontage eine zusätzliche Abstützung des Eigengewichts bedarf. Andererseits ist bei hohen Umgebungstemperaturen und dadurch bedingter schneller Reaktionszeit das unmittelbar nach Reaktionsbeginn in das Sackloch einzubringende Befestigungsmittel zumeist nicht mehr nachjustierbar. Derartige zwingend aufeinanderfolgende Prozessschritte stellen insbesondere bei der Realisierung von komplexen Bauprojekten ein erhebliches Koordinationsproblem dar.

Die auf Zug oder Scherzug beanspruchten Befestigungsmittel sind zumeist als Anker oder als Ankerstange ausgebildet. Bei einem Anker dient ein über die Aussenfläche hinausragender Gewindebolzen zur Montage von Montageelementen. Die funktionell als Dübel zur Verbindung zweier Flächen wirksame Ankerstange ist mit Aussenprofilierungen zur formschlüssigen Einbettung als Bewehrungsverlängerung in später umgossenen Beton ausgebildet. Bei den Ankerstangen handelt es sich um ein sehr preiswertes Massenprodukt, welches zumeist als laufende Meterware gefertigt und bedarfsweise abgelängt wird.

Nach der US5466086 sind mit einer durchgehenden axialen Bohrung versehene Befestigungsmittel mit radialen Ausnehmungen ausgeführt, welche bezüglich des Befestigungsmittels in einer Längsebene einen bezüglich des Rissstoppens vorteilhaften alternierenden Wechsel zwischen ausgehärteter Substanz und direktem Kontakt mit der Bohrlochwandung ausbilden. Nach der DE4033396 weist ein hülsenförmiges Montageelement, für ein als Ankerstange ausgeführtes Befestigungsmittel mit radialen Ausnehmungen, axial verlaufende, die Ankerstange koaxial zentrierende, Führungsstege auf, die in der aushärtbaren Substanz eingebettet auch als Rissstopper wirken. Nach der DE4314594 wird bei Ankerstangen der Risstopp über nicht haftende Längsbereiche realisiert.

Nach der DE19725923 sind die radialen Ausnehmungen der Ankerstange aus winkelig versetzten ebenen Einkerbungen ausgebildet. Nach der EP0947713 sind die in Kontakt mit der Bohrlochwandung stehenden Flächen einer Ankerstange wechselständig angeordnet und von Nuten umgeben, welche sich längs teilen und wieder vereinigen.

Die US5243805 zeigt einen Traganker für den Fassadenbau, der in einem Bohrloch eingemörtelt wird. An der Aussenseite des Tragankers ist dieser mit Verformungen oder Ansätzen versehen. Der Traganker kann Öffnungen zur Injizierung von Mörtelmasse aufweisen. An einem Ende ist das Rohrprofil radial zusammengepresst und dient als Auflager, bzw. Befestigung für das zu befestigende Fassadenelement.

Des weiteren offenbart die DE4206260 eine Vorrichtung für das Rundkneten von Rohren aus Metall.

Die Aufgabe der Erfindung besteht in der Realisierung eines einfachen und als Massenprodukt herstellbaren, für aushärtbare Substanzen ausgebildeten Befestigungsmittels, insbesondere einer Ankerstange für Injektionsharzmörtel. Ein weiterer Aspekt besteht in der Vorpositionierbarkeit und Vorbelastbarkeit des noch nicht adhäsiv gebundenen Befestigüngsmittels, sowie in dem zeitlichen Unterbrechen der Prozessschritte.

Die Aufgabe wird im wesentlichen durch die Merkmale der unabhängigen Ansprüche gelöst. Vorteilhafte Weiterbildungen ergeben sich aus den Unteransprüchen.

Im wesentlichen ist ein, vorteilhaft als eine Ankerstange ausgeführtes, Befestigungsmittel, welche in der Art eines Injektionsdübels mittels einer aushärtbaren Substanz in Sacklöchern im Beton befestigt wird, als umfänglich geschlossenes mittel- bis starkwandiges Rohrstück gleichmässiger Wandstärke mit einer durchgehenden axialen Öffnung ausgeführt, welches zumindest teilweise radial eingebeult ist.

Umfänglich geschlossene Rohre gleichmässiger Wandstärke sind als Halbfabrikate in Meterware verfügbar und einfach auf eine entsprechende, vor Ort konkret benötigte, Länge ablängbar. Die fliessfähige aushärtbare Substanz kann einfach durch das bereits positionierte Befestigungsmittel durch die axiale Bohrung hindurch in den Grund des Sackloches und aussen herum in den zur Innenwandung des Sacklochs ausgebildeten Ringraum injiziert werden. Die Einbeulungen der Ankerstange bilden innerhalb der Einbringungslänge radiale Ausnehmungen bezüglich der Innenwandung des Sacklochs auf, welche nach dem Aushär-ten der bspw. als Reaktionsharzmörtel ausgeführten aushärtbaren Substanz eine formschlüssige axiale Befestigung ausbilden. Im Querschnitt des Rohrstücks können unter Beibehaltung der Umfangslänge der neutralen Sehne durch die Einbeulungen an einer umfänglich anderen Stelle Ausbeulungen ausgebildet werden, welche sich, abhängig von der konkreten Beulform, über den ursprünglichen Durchmesser hinaus erstrecken.

Die geringfügige Verminderung der Zugfestigkeit durch die mittel- bis starkwandige Kreisringfläche gegenüber der Kreisfläche bei Rundprofilen ist vertretbar bzw. bei gleichem Gewicht des Befestigungsmittels einfach durch die Verwendung eines grösseren Durchmessers des Befestigungsmittels kompensierbar. Das den Biegewiderstand zur Übertragung von Scherkräften bestimmende Flächenmoment ist bei Rohren vergleichbar mit dem von Rundprofilen. Durch die gleichmässige Wandstärke kann, insbesondere auch bei dynamischer Belastung, die in das Befestigungsmittel über Scherung innerhalb des Sacklochs eingeleitete Kraft ohne lokal grössere Deformationen oder Schädigungen im Befestigungsmittel übertragen werden.

Vorteilhaft erstrecken sich die umfänglich am Rand der Einbeulungen ausgebildeten lokalen Ausbeulungen zumindest teilweise über einen koaxialen Durchmesser, welcher geringfügig grösser als der des unverbeulten Rohrstücks bzw. des zugeordneten Sacklochs ist, wodurch das Befestigungsmittel durch diese lokalen Ausbeulungen koaxial im zugeordneten Sackloch zentrierbar und bezüglich geringer Belastungen kraftschlüssig positionierbar und nachjustierbar ist. Die Injektion der adhäsiv aushärtbaren Substanz durch die axiale Öffnung kann zu einem beliebigen, vor der Beanspruchung mit der Nennlast liegenden, späteren Zeitpunkt erfolgen.

Der vorteilhafte in einer Längsebene alternierende Wechsel zwischen aushärtbarer Substanz und direktem Kontakt mit der Bohrlochwandung bildet für einen sich längs der Grenzfläche zwischen aushärtbarer Substanz und dem Befestigungsmittel ausbreitendem Riss einen Rissstopp in Form einer axial begrenzten Länge aus.

Vorteilhaft bilden die eingebeulten Teilbereiche des Rohrabschnitts ebene Flächenbereiche aus, wodurch eine knickfeste Versteifung der Querschnittsfläche des Befestigungsmittels ausgebildet wird.

Vorteilhaft sind die Einbeulungen zumindest teilweise wechselständig längs des axialen Bereiches des Befestigungsmittels angeordnet, wobei die Einbeulungen weiter vorteilhaft halbwinkelig versetzt sind, also bei zwei gegenüberliegenden Einbeulungen um 90°, bei ein gleichseitiges Dreieck ausbildenden Einbeulungen um 60° usw.

Vorteilhaft bilden sich entlang der Einbeulungen Nuten längs des Befestigungsmittels aus, welche sich in den, vorteilhaft kreisrunden, Übergangsbereichen längs aufteilen bzw. wieder vereinigen, wodurch eine umfänglich gleichmässige Verteilung der stirnseitig im Grund des Sacklochs austretenden aushärtbaren Substanz erzielt wird.

Das Befestigungsmittel wird vorteilhaft aus im Rundknetverfahren kaltumgeformten Stahl hergestellt, wodurch die Gefügestruktur nicht durch spanende Bearbeitung geschädigt und gegenüber einer Warmumformung die Festigkeit erhöht wird. Insbesondere ist das Rundknetverfahren auf in Meterware vorliegende rohrförmige Halbzeuge anwendbar, wodurch weiter vorteilhaft die Befestigungsmittel zumindest teilweise kontinuierlich in Meterware vorfertigbar sowie durch die axial periodischen Einbeulungen und Ausbeulungen am Einsatzort diskret ablängbar sind.

Die auf die erforderliche Länge zur Kraftübertragung abgelängten Befestigungsmittel sind in einer ersten vorteilhaften Variante als Ankerstange ausgebildet, welche etwa mit einer halben Länge der etwa dem zwanzigfachen des Durchmessers entsprechenden Gesamtlänge in ein Sackloch eingelassen und weiter vorteilhaft kraftschlüssig positioniert wird. Durch Injektionsmörtel wird die Ankerstange mit dem ersten Festkörper adhäsiv formschlüssig verbunden.

Bei einer vorteilhaften Anwendung der Ankerstange als Bewehrungsverlängerung wird das freistehende Ende der Ankerstange in die fliesfähige Phase des zweiten Festkörpers wie Beton eingebettet. Diese fliesfähige Phase bindet um die Ankerstange herum ab und befestigt somit den zweiten Festkörper über die Ankerstange formschlüssig an dem ersten Festkörper.

Bei einer vorteilhaften Anwendung der Ankerstange als Dübel wird ein in einem zweiten Festkörper, vorher oder danach mit einer temporär fliessfähigen und aushärtbaren Substanz gefülltes, Loch über das freie Ende der Ankerstange positioniert, wodurch nach Aushärtung der aushärtbaren Substanz beider Köper miteinander formschlüssig adhäsiv verbunden sind.

In einer vorteilhaften Ausbildung als Anker wird, vor oder nach der Befestigung im ersten Festkörper, auf ein in im runden Bereich abgelängtes Befestigungsmittel ein Aussen- oder ein Innengewinde aufgebracht.

Die Erfindung wird bezüglich eines vorteilhaften Ausführungsbeispiels näher erläutert mit:
Fig. 1 als Ankerstange
Fig. 1A - 1 E Querschnitte gemäss den Linien A-A bis E-E in Fig.1
Fig. 2 als Anker
Fig. 2A - D Querschnitte gemäss den Linien A-A bis D-D in Fig. 2

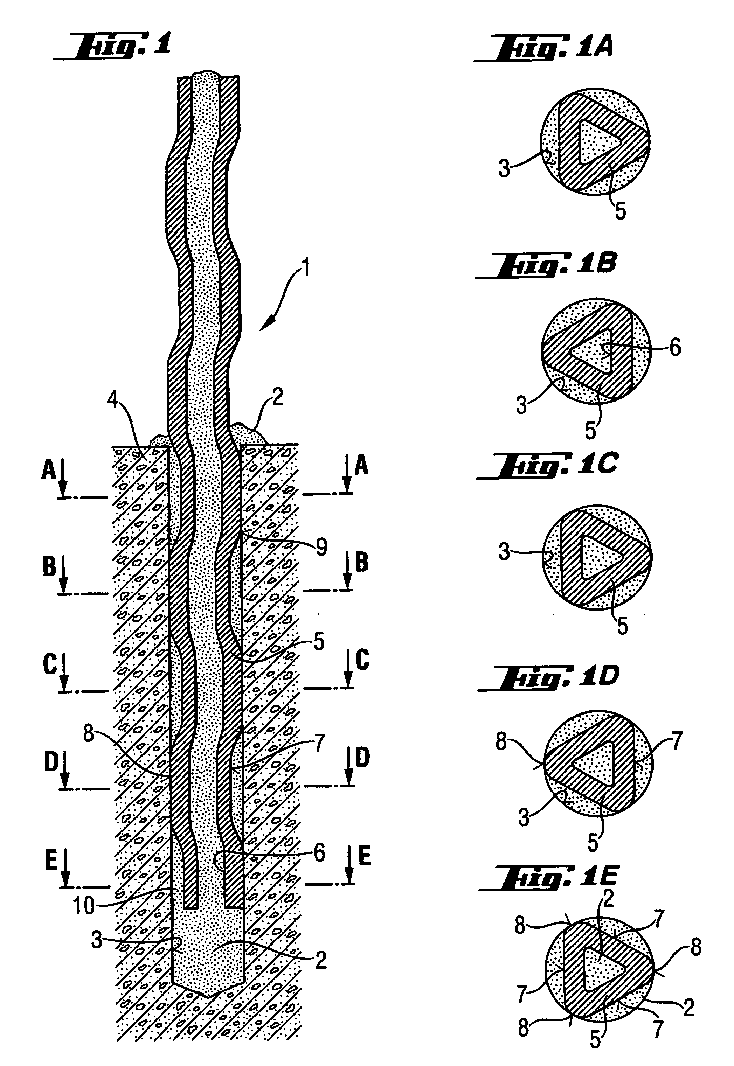

Nach Fig. 1 ist ein, aus Meterware ablängbares, mit einer zur Kraftübertragung erforderlichen, etwa dem zwanzigfachen des Durchmessers entsprechenden Gesamtlänge, als Ankerstange ausgeführtes, Befestigungsmittel 1 bezüglich einer der halben Gesamtlänge entsprechenden Einbringungslänge mittels einer aushärtbaren Substanz 2 in einem Sackloch 3 im Beton als einem Festkörper 4 axial formschlüssig befestigt. Das Befestigungsmittel 1 ist als ein umfänglich geschlossenes mittel- bis starkwandiges Rohrstück 5 gleichmässiger Wandstärke von 1/8 bis 1/4 des Durchmessers ausgeführt, welches radial eingebeult und mit einer durchgehenden axialen Öffnung 6 versehen ist. Die wechselständig angeordneten Einbeulungen 7 bilden innerhalb der Einbringungslänge radiale Ausnehmungen bezüglich der Innenwandung des Sacklochs 3 aus. Im Querschnitt des Rohrstücks 5 sind unter Beibehaltung der Umfangslänge der neutralen Sehne an einer umfänglich um 60° versetzten Stelle, den drei umfänglich gleichverteilten, ebene Flächenbereiche ausbildenden, Einbeulungen 7 zugeordnete, lokale Ausbeulungen 8 ausgebildet. Die lokalen Ausbeulungen 8 erstrecken sich über einen koaxialen Durchmesser, welcher geringfügig grösser als der des uneingebeulten Rohrstücks 5 sowie des zugeordneten Sacklochs 3 ist. Der in einer Längsebene bezüglich des Befestigungsmittels 1 alternierende Wechsel des Kontakts zwischen aushärtbarer Substanz 2 und der Bohrlochwandung des Sacklochs 3 bildet für einen sich längs der Grenzfläche zwischen aushärtbarer Substanz 2 und dem Befestigungsmittel 1 ausbreitendem Riss einen Rissstopp 9 in Form einer durch die Einbeulung 7 axial begrenzten Länge aus. Entlang der umfänglich axial wechselständig versetzten radialen Einbeulungen 7 bilden sich Nuten 10 längs des Befestigungsmittels 1 aus.

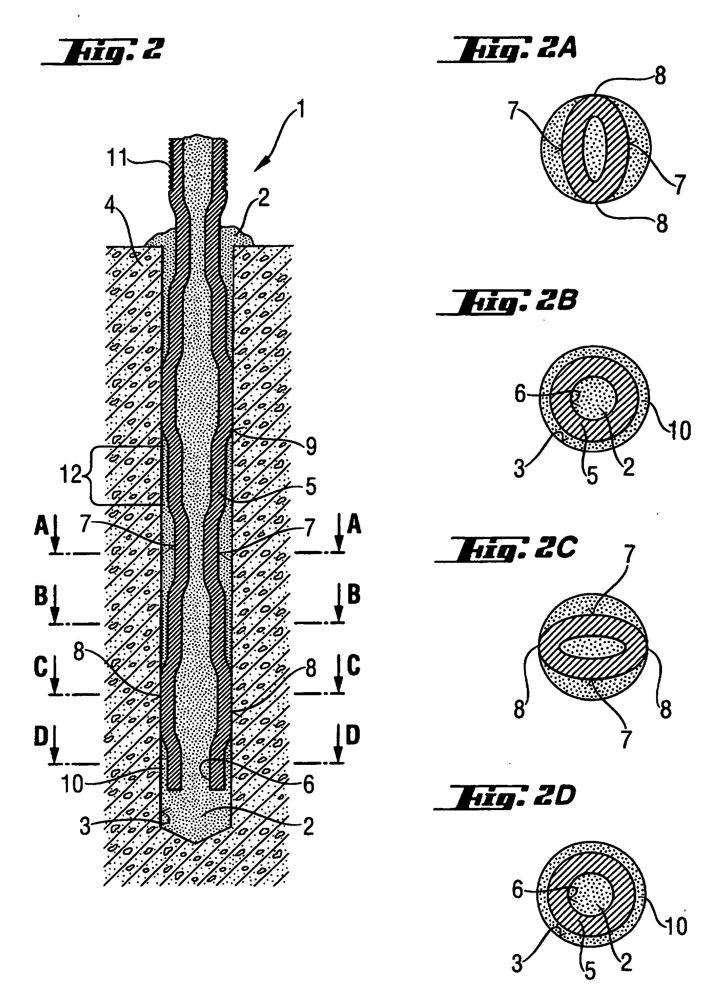

Nach Fig. 2 ist ein, aus Meterware ablängbares, mit einer zur Kraftübertragung erforderlichen, etwa dem zwölffachen des Durchmessers entsprechenden Gesamtlänge, als Anker ausgeführtes, Befestigungsmittel 1 grösstenteils mittels einer aushärtbaren Substanz 2 in einem Sackloch 3 im Beton als einem Festkörper 4 axial formschlüssig befestigt. Das an der im axialen Bereich ohne Einbeulungen 7 abgelängte, nicht im Sackloch 3 angeordnete, freie Ende des Rohrstücks 5 weist ein Aussengewinde 11 auf. Im Querschnitt des Rohrstücks 5 sind unter Beibehaltung der Umfangslänge der neutralen Sehne an einer umfänglich um 90° versetzten Stelle, den zwei umfänglich gleichverteilten, gekrümmte Flächenbereiche ausbildenden, Einbeulungen 7 zugeordnete, lokale Ausbeulungen 8 ausgebildet. Entlang der mit einbeulungsfreien runden, axialen Übergangsbereichen 12 abwechselnden, umfänglich axial wechselständig versetzten radialen Einbeulungen 7 bilden sich Nuten 10 längs des Befestigungsmittels 1 aus.

## Patentansprüche

1. Befestigungsmittel, ausgebildet für eine zumindest teilweise formschlüssige axiale Befestigung mit einem Festkörper (4) über eine, in ein Sackloch (3) einbringbare, temporär fliessfähige und aushärtbare Substanz (2), wobei das Befestigungsmittel (1) ein umfänglich geschlossenes mittel- bis starkwandiges Rohrstück (5) gleichmässiger Wandstärke ist, welches zumindest teilweise radial eingebeult ist und, eine durchgehende axiale Öffnung (6) aufweist, **dadurch gekennzeichnet, dass** das Rohrstück (5) zumindest in diskreter Länge von einem in Meterware verfügbaren Halbfabrikat vor Ort ablängbar ist.

2. Befestigungsmittel nach Anspruch 1, **dadurch gekennzeichnet, dass** sich zumindest eine, einer Einbeulung (7) zugeordnete, lokale Ausbeulung (8) zumindest teilweise über einen koaxialen Durchmesser erstreckt, welcher geringfügig grösser als der Durchmesser des nichteingebeulten Rohrstücks (5) ist.

3. Befestigungsmittel nach der Anspruch 1 oder 2, **dadurch gekennzeichnet, dass** innerhalb einer Längsebene durch das Rohrstück (5) dessen Aussenwandung sowohl mit der aushärtbaren Substanz (2) als mit einer Bohrlochwandung des Sacklochs (3) in direkten Kontakt bringbar ist.

4. Befestigungsmittel nach einem der Ansprüche 1 bis 3, **dadurch gekennzeichnet, dass** zumindest eine Einbeulung (7) des Rohrstücks (5) zumindest teilweise als ebener Flächenbereich ausgebildet ist.

5. Befestigungsmittel nach einem der Ansprüche 1 bis 4, **dadurch gekennzeichnet, dass** die Einbeulungen (7) zumindest teilweise umfänglich axial wechselständig angeordnet und optional halbwinkelig versetzt sind.

6. Befestigungsmittel nach einem der Ansprüche 1 bis 5, **dadurch gekennzeichnet, dass** längs des Rohrstücks (5) entlang der Einbeulungen (7) zumindest eine Nut (10) ausgebildet ist, welche in einem optionalen axialen Übergangsbereich (12) umfänglich aufgeteilt ist.

7. Befestigungsmittel nach einem der Ansprüche 1 bis 6, **dadurch gekennzeichnet, dass** das Befestigungsmittel (1) als Ankerstange ausgebildet ist.

8. Befestigungsmittel nach einem der Ansprüche 1 bis 7, **dadurch gekennzeichnet, dass** an zumindest einem Ende des Befestigungsmittels (1) ein Gewinde (11) vorgesehen ist.

## Claims

1. Fixing means designed for at least partial form-fitting axial fixing with a solid body (4) by means of a temporarily flowable and curable substance (2) introducible into a blind hole (3), whereby the fixing means (1) is a medium or thick-walled tube section (5) of even wall thickness, which is at least partially radially indented and has a continuous axial opening (6), **characterised in that** the tube section (5) may be cut to length on site in discrete lengths from a semifinished product available by the metre.

2. Fixing means according to Claim 1, **characterised in that** at least one local convexity (8) assigned to an indentation (7) extends at least partially over a coaxial diameter that is slightly greater than the diameter of the non-indented tube section (5).

3. Fixing means according to Claim 1 or 2, **characterised in that** within a longitudinal plane through the pipe section (5), its outer wall may be brought into direct contact both with the curable substance (2) and with a bore wall of the blind hole (3) .

4. Fixing means according to one of the claims 1 to 3, **characterised in that** at least one indentation (7) of the tube section (5) is at least partially designed as a planar surface region.

5. Fixing means according to one of the claims 1 to 4, **characterised in that** the indentations (7) are arranged offset at least partially circumferentially and axially in alternating fashion and, optionally, at half-angles.

6. Fixing means according to one of the claims 1 to 5, **characterised in that** at least one groove (10) is formed lengthwise to the tube section (5) along the indentations (7), said groove being circumferentially subdivided in an optional axial transition region (12).

7. Fixing means according to one of the claims 1 to 6, **characterised in that** the fixing means (1) is designed as a tie rod.

8. Fixing means according to one of the claims 1 to 7, **characterised in that** a thread (11) is provided on at least one end of the fixing means (1).

## Revendications

1. Moyen de fixation conçu pour une fixation axiale au moins partiellement par complémentarité de formes avec un corps solide (4) par l'intermédiaire d'une substance temporairement coulante et durcissable (2) pouvant être introduite dans un trou borgne (3), le moyen de fixation (1) étant un élément tubulaire à paroi moyenne à épaisse et à périphérie fermée (5) d'épaisseur de paroi uniforme, qui comporte des zones bosselées concaves au moins partiellement radiales et est pourvu d'une ouverture axiale débouchante (6), **caractérisé en ce que** l'élément tubulaire (5) peut être tronçonné sur place au moins en longueurs discontinues à partir d'un produit semi-fini disponible au mètre.

2. Moyen de fixation selon la revendication 1, **caractérisé en ce qu'**au moins une zone bosselée convexe locale (8) associée à une zone bosselée concave (7) s'étend au moins partiellement sur un diamètre coaxial qui est légèrement supérieur au diamètre de l'élément tubulaire (5) sans zone bosselée concave.

3. Moyen de fixation selon la revendication 1 ou 2, **caractérisé en ce qu'**à l'intérieur d'un plan longitudinal traversant l'élément tubulaire (5) la paroi extérieure de celui-ci peut être amenée en contact direct aussi bien avec la substance durcissable (2) qu'avec une paroi de trou foré du trou borgne (3).

4. Moyen de fixation selon une des revendications 1 à 3, **caractérisé en ce qu'**au moins une zone bosselée concave (7) de l'élément tubulaire (5) est conformée au moins partiellement en zone à surface plane.

5. Moyen de fixation selon une des revendications 1 à 4, **caractérisé en ce que** les zones bosselées concaves (7) sont disposées au moins partiellement en alternance axiale sur la circonférence et sont décalées optionnellement d'un demi-angle.

6. Moyen de fixation selon une des revendications 1 à 5, **caractérisé en ce que** le long de l'élément tubulaire (5), au niveau des zones bosselées concaves (7) est ménagée au moins une gorge (10) qui, dans une zone de transition axiale optionnelle (12), est divisée en périphérie.

7. Moyen de fixation selon une des revendications 1 à 6, **caractérisé en ce que** le moyen de fixation (1) est conformé en tige d'ancrage.

8. Moyen de fixation selon une des revendications 1 à 7, **caractérisé en ce qu'**à au moins une extrémité du moyen de fixation (1) est prévu un filetage (11).
